# EUROPÄISCHE PATENTSCHRIFT

(11) **EP 2 421 297 B1**
(45) Veröffentlichungstag und Bekanntmachung des Hinweises auf die Patenterteilung: **27.03.2013**
(21) Anmeldenummer: 10008619.8
(22) Anmeldetag: 18.08.2010
(51) Int. Cl.: H04W 16/14, H04W 36/06, H04W 72/10

(54) **Verfahren zum Kanalwechsel in einem drahtlosen Kommunikationsnetzwerk**
Method for changing channels in a wireless communication network
Procédé de changement de canal dans un réseau de communication sans fil

(43) Veröffentlichungstag der Anmeldung: 22.02.2012
(73) Patentinhaber: Siemens Aktiengesellschaft, 80333 München (DE)
(72) Erfinder: Adling, Anja, 90478 Nürnberg (DE); Bölderl-Ermel, Wolfgang, 90530 Wendelstein (DE); Keller, Stefan, 76133 Karlsruhe (DE)

(56) Entgegenhaltungen:
- EP-A1- 2 205 016
- EP-A2- 1 944 996
- WO-A1-2010/027308
- US-A1- 2010 103 850

## Beschreibung

Die Erfindung betrifft ein Verfahren zum Kanalwechsel in einem drahtlosen Kommunikationsnetzwerk, das zumindest einen Zugangsknoten und eine Anzahl an Clients umfasst, wobei das Kommunikationsnetzwerk in einem vorgegebenen Frequenzbereich einen von mehreren möglichen Kanälen als Sekundärnutzer zur Datenkommunikation nutzt gemäß den Merkmalen im Oberbegriff des Anspruches 1. Die Erfindung betrifft ferner einen Zugangsknoten eines drahtlosen Kommunikationsnetzwerks gemäß den Merkmalen im Oberbegriff des Anspruches 10. Ein solches Verfahren und ein Zugangsknoten sind beispielsweise aus der EP 1 944 996 A2 bekannt.

Das sog. ISM-Frequenzband (Industrial, Scientific and Medical Band) ist weltweit verfügbar und im Frequenzbereich von 5,15 GHz bis 5,725 GHz weitgehend frei von Lizenzzahlungen. Aus diesem Grund wird es von Anwendern nicht nur für drahtlose Kommunikationsnetzwerke, basierend beispielsweise auf dem WLAN (Wireless Local Area Network)-Standard oder Bluetooth verwendet, sondern auch von Radaranlagen auf Flughäfen oder Schiffen. Aufgrund der im genannten Frequenzband möglichen Mehrfachnutzung gibt es Regeln, um die kooperative Nutzung zu ermöglichen.

Die Regulierungsbehörden teilen die Anwender (d.h. die drahtlosen Kommunikationsnetzwerke sowie Radaranwendungen) in Primär- und Sekundärnutzer ein, was einer Priorisierung gleich kommt. In Deutschland, aber auch in vielen europäischen Ländern, gilt diese Einteilung besonders für die Bereiche 5,25 GHz bis 5,35 GHz (Kanal 52 bis 64) und 5,47 bis 5,725 GHz (Kanal 100 bis 140). Gemäß den Regularien muss sich ein WLAN als Sekundärnutzer im Außenbereich zurückziehen, sobald durch dieses eine Radaranwendung erkannt wurde, da diese grundsätzlich ein Primärnutzer ist. Hieraus ergibt sich die Notwendigkeit, dass durch das WLAN der durch das Kommunikationsnetzwerk verwendete Kanal nach Primärnutzern abgesucht werden muss. Bei Erkennung eines Primärnutzers muss der Kanal durch das WLAN freigegeben werden und auf einen anderen, nicht durch andere Primär- oder Sekundärnutzer genutzten Kanal ausgewichen werden. Diese Fähigkeit wird als Dynamic Frequency Selection (DFS) bezeichnet.

Um einen Primärnutzer zu erkennen, muss der Zugangsknoten des WLAN den von ihm verwendeten Kanal periodisch abhören. Dies wird als Channel Availability Check, CAC, bezeichnet. Sobald ein fremder Sender erkannt wurde, sperrt der Zugangsknoten diesen Kanal für die Nutzung seines Kommunikationsnetzwerks für eine bestimmte Zeit und initiiert einen Wechsel auf einen freien Kanal. Die Auswahl des neuen Kanals erfolgt dabei zufällig und wird in der Regel vom Zugangsknoten durchgeführt. Auf diesem neuen Kanal muss zunächst für eine vorgegebene Zeitspanne, in der Regel 60 Sekunden, geprüft werden, ob ein Primärnutzer anwesend ist. Diese Prüfung wird als Channel Observation Time (COT) bezeichnet. Konnte kein fremder Sender aufgefunden werden, so wird ein Wechsel zu diesem freien Kanal vorgenommen. Der Wechsel wird ebenfalls von den Clients des drahtlosen Kommunikationsnetzwerks vorgenommen. Wird ein anderes System während der COT erkannt, so sperrt der WLAN-Zugangsknoten auch diesen Kanal für eine bestimmte Zeit und prüft den nächsten Kanal für die vorgegebene Zeit auf die Anwesenheit anderer Systeme.

Die Unterbrechung der Datenkommunikation des drahtlosen Kommunikationsnetzwerks ist nicht nur eine Folge eines erzwungenen Kanalwechsels, sondern findet häufig auch nach 24 Stunden statt, um eine ausführliche Prüfung sämtlicher Funkkanäle durchzuführen. Dadurch wird mindestens einmal pro Tag die Datenkommunikation in dem drahtlosen Kommunikationsnetzwerk unterbrochen. Manche Systeme führen diese Prüfung der Verfügbarkeit im laufenden Betrieb durch, wobei eine ausführliche Prüfung der Kanäle nur im Falle eines Verdachts auf andere Systeme durchgeführt wird.

Ein mit einem Kanalwechsel verbundenes Problem ist die Handover-Zeit eines jeweiligen WLAN-Clients, nachdem der Zugangsknoten einen Primärnutzer erkannt hat. Der Kanalwechsel ist in der Regel mit einem Kommunikationsausfall im zeitlichen Bereich von mehreren Beacon-Intervallen verbunden, welche sich durch die dann initiierte Suche eines freien Kanals ergibt. Auch dann, wenn der Zugangsknoten bereits Kenntnis über einen freien Kanal hat, ist der Kommunikationsausfall von mehreren Beacon-Intervallen die Folge. Ein Beacon-Intervall beträgt typischerweise 20 bis 1000 ms. Der Grund für den Kommunikationsausfall liegt darin, dass der Zugangsknoten zwar sofort, nachdem ein Primärnutzer erkannt wurde, in einem Beacon eine Information (eine sog. Channel Switch Announce, CSA) aussendet, mit der den Clients mitgeteilt wird, auf welchem Kanal die weitere Kommunikation erfolgen wird. Der Zugangspunkt selbst führt diesen Kanalwechsel jedoch nicht sofort durch. Denn um sicherzugehen, dass tatsächlich alle Clients des drahtlosen Kommunikationsnetzwerks den Kanal wechseln, verweilt der Zugangspunkt noch mehrere Beacon-Intervalle auf dem alten Kanal, um das CSA-Element zu versenden. Eine Kommunikation ist den Clients erst dann wieder erlaubt, wenn sie auf dem neuen, freien Kanal ein Beacon von dem Zugangsknoten empfangen, in dem sich kein CSA-Element befindet.

Grundsätzlich ist es, insbesondere beim industriellen Einsatz eines drahtlosen Kommunikationsnetzwerks, von Bedeutung, dass eine definierte Güte des Kommunikationsnetzwerks hinsichtlich Datendurchsatz und Echtzeitfähigkeit gegeben ist. Diese Güte ist jedoch nur dann gegeben, wenn das Verhalten sämtlicher Knoten (Zugangsknoten und Clients) des Kommunikationsnetzwerks planbar und vorhersagbar ist. Nur auf diese Weise lassen sich stabile und zuverlässige Funkverbindungen realisieren.

Es ist daher Aufgabe der vorliegenden Erfindung, ein Verfahren anzugeben, mit dem ein Kanalwechsel in einem drahtlosen Kommunikationsnetzwerk auf verbesserte Weise erfolgen kann. Eine weitere Aufgabe besteht darin, einen Zugangsknoten eines drahtlosen Kommunikationsnetzwerks anzugeben, welcher auf verbesserte Weise einen effizienten Kanalwechsel eines drahtlosen Kommunikationsnetzwerks ermöglicht.

Diese Aufgaben werden gelöst durch ein Verfahren gemäß dem Merkmal des Patentanspruches 1 sowie einem Zugangsknoten gemäß den Merkmalen des Patentanspruches 10. Vorteilhafte Ausgestaltungen ergeben sich aus den abhängigen Patentansprüchen.

Die Erfindung schafft ein Verfahren zum Kanalwechsel in einem drahtlosen Kommunikationsnetzwerk, das zumindest einen Zugangsknoten und eine Anzahl an Clients umfasst, welches in einem vorgegebenen Frequenzbereich einen von mehreren möglichen Kanälen als Sekundärnutzer zur Datenkommunikation nutzt. Bei dem Verfahren erfolgt eine Datenkommunikation zwischen dem Zugangsknoten und der Anzahl an Clients über eine erste Sende-/Empfangs-Schnittstelle des Zugangsknotens auf einem ersten Kanal der möglichen Kanäle. Parallel zu der Datenkommunikation über die erste Sende-/Empfangs-Schnittstelle werden die möglichen Kanäle daraufhin überprüft, welche der Kanäle freie Kanäle sind, die durch keinen Primärnutzer verwendet werden. Schließlich wird ein Kanalwechsel von dem ersten Kanal auf einen der freien Kanäle durchgeführt, wenn durch den Zugangsknoten des Kommunikationsnetzwerks eine bevorrechtigte Nutzung des ersten Kanals durch einen Primärnutzer festgestellt wird. Erfindungsgemäß erfolgt die Überprüfung der möglichen Kanäle durch eine zweite Sende-/Empfangsschnittstelle (FK2) des Zugangsknotens. Die Datenkommunikation erfolgt auf dem zu verwendenden freien Kanal über die zweite Sende-/Empfangs-Schnittstelle.

Die Sende-/Empfangs-Schnittstellen des Zugangsknotens werden auch als Funkadapter bezeichnet. Wenn in der vorliegenden Beschreibung von der Überprüfung der möglichen Kanäle die Rede ist, so können hierunter alle Kanäle des vorgegebenen Frequenzbereichs, aber auch nur eine vordefinierte Teilmenge sämtlicher Kanäle des vorgegebenen Frequenzbereichs hierunter verstanden werden.

In einer anderen Variante liegt ein freier Kanal insbesondere dann vor, wenn ein Kanal weder durch einen Primärnutzer noch durch einen Sekundärnutzer verwendet wird.

Dabei kann ein Primärnutzer beispielsweise eine Sende- oder Sende-/Empfangs-Einheit bzw. ein entsprechendes Drahtlosnetz sein, welches aufgrund einer Regulierungsbehörde für Drahtlos-Kommunikation als Primärnutzer eingestuft ist. Weiterhin kann ein Sekundärnutzer beispielsweise eine Sende- oder Sende-/Empfangs-Einheit bzw. ein entsprechendes Drahtlosnetz sein, welches aufgrund einer Regulierungsbehörde für Drahtlos-Kommunikation als Sekundärnutzer eingestuft ist.

Durch die Nutzung einer zusätzlich verfügbaren Sende-/Empfangs-Schnittstelle lediglich zum Scannen des Frequenzbereichs auf andere Nutzer, insbesondere Primärnutzer, ergeben sich verschiedene Vorteile. Einerseits kann ein Kommunikationsabbruch alle 24 Stunden auf der operativ genutzten Sende-/Empfangs-Schnittstelle vermieden werden. Andererseits kann die Umschaltung von dem ersten Kanal auf einen freien Kanal schneller erfolgen, da zum Zeitpunkt der Erkennung eines Primärnutzers auf dem ersten Kanal bereits bekannt ist, welcher Kanal des vorgegebenen Frequenzbereichs für die weitere Kommunikation verwendet werden kann. Die Unterbrechung der Datenkommunikation kann hierdurch erheblich reduziert werden.

Wenn die Datenkommunikation auf dem zu verwendenden freien Kanal über die zweite Sende-/Empfangs-Schnittstelle erfolgt, kann nach der Erkennung eines Primärnutzers einer weiter verringerten Umschaltzeit erzielt werden. Hierdurch kann der einleitend beschriebene Kommunikationsabbruch für eine bestimmte Zeit auf der operativ genutzten ersten Sende-/Empfangs-Schnittstelle nach Erkennen eines Primärnutzers vollständig stark verringert werden.

Um sicherzustellen, dass tatsächlich mit der Erkennung eines Primärnutzers auf dem verwendeten ersten Kanal des drahtlosen Kommunikationsnetzwerks die Information über einen freien Kanal zur Verfügung steht, ist vorgesehen, dass die Überprüfung der möglichen Kanäle auf freie Kanäle über die zweite Sende-/Empfangs-Schnittstelle kontinuierlich durchgeführt wird.

Auf welchem freien Kanal die weitere Kommunikation bei der Detektion eines Primärnutzers auf dem ersten Kanal fortgeführt werden soll, wird bei einem Kanalwechsel der Anzahl an Clients in einem Beacon der zu verwendende freie Kanal mitgeteilt. Dabei ist es zweckmäßig, wenn das Beacon unmittelbar nach Detektion der Nutzung des ersten Kanals durch einen Primärnutzer an die Clients übertragen wird. Insbesondere ist in diesem Zusammenhang vorgesehen, dass die Information über den zu verwendenden freien Kanal in dem ersten, den Kanalwechsel signalisierenden Beacon integriert wird.

In dieser alternativen Variante wird den Clients eine Hardware-Adresse (sog. MAC-Adresse, Media Access Control) der zweiten Sende-/Empfangs-Schnittstelle in dem Beacon mitgeteilt, in dem der zu verwendende freie Kanal signalisiert wird.

Zweckmäßigerweise werden nach erfolgtem Kanalwechsel durch die erste Sende-/Empfangs-Schnittstelle des Zugangsknotens parallel zu der Datenkommunikation über die zweite Sende-/Empfangs-Schnittstelle alle der möglichen Kanäle daraufhin überprüft, welche der Kanäle freie Kanäle sind. Mit anderen Worten bedeutet dies, dass nach einer Übernahme der operativen Kommunikation durch die zweite Sende-/Empfangs-Schnittstelle nun die erste Sende-/Empfangs-Schnittstelle das Scannen nach freien Kanälen übernimmt und damit ein Rollentausch der Schnittstellen stattgefunden hat.

Das erfindungsgemäße Verfahren wird insbesondere in einem Frequenzbereich im ISM-Frequenzband zwischen 5,15 GHz und 5,725 GHz angewendet, da dieses aufgrund seiner Verfügbarkeit und weitestgehenden Lizenzfreiheit häufig parallel von drahtlosen Kommunikationsnetzwerken als auch von Radaranwendungen genutzt wird. Grundsätzlich kann das beschriebene Verfahren jedoch auch in anderen Frequenzbändern zur Anwendung kommen.

Insbesondere ist das Kommunikationsnetzwerk als Sekundärnutzer des vorgegebenen Frequenzbereichs ein auf WLAN oder Bluetooth basierendes Kommunikationsnetzwerk.

Ein Primärnutzer des vorgegebenen Frequenzbereichs ist insbesondere dann gegeben, wenn durch den Zugangsknoten des drahtlosen Kommunikationsnetzwerks ein Radarsignal detektiert wurde.

Die Erfindung schafft weiter einen Zugangsknoten für ein drahtloses Kommunikationsnetzwerk, das insbesondere auf WLAN oder Bluetooth basiert. Der Zugangsknoten ist dazu ausgebildet,
- eine Datenkommunikation zwischen dem Zugangsknoten und einer Anzahl an Clients des Kommunikationsnetzwerks über eine erste Sende-/Empfangs-Schnittstelle des Zugangsknotens auf einem ersten Kanal einer Anzahl an möglichen Kanälen vorzunehmen;
- parallel zu der Datenkommunikation über die erste Sende-/Empfangs-Schnittstelle auch eine zweite Sende-/Empfangs-Schnittstelle für die Anzahl der möglichen Kanäle daraufhin zu überprüfen, welche der Kanäle freie Kanäle sind, die durch keinen Primärnutzer verwendet werden;
- einen Kanalwechsel von dem ersten Kanal auf einen der freien Kanäle zu initiieren, wenn durch den Zugangsknoten des Kommunikationsnetzwerks eine bevorrechtigte Nutzung des ersten Kanals durch einen Primärnutzer festgestellt wird.

Der Zugangsknoten ist erfindungsgemäß dazu ausgebildet,
- die möglichen Kanäle durch eine zweite Sende-/Empfangsschnittstelle des Zugangsknotens zu überprüfen; und
- die Datenkommunikation auf dem zu verwendenden freien Kanal über die zweite Sende-/Empfangs-Schnittstelle (FK2) durchzuführen.

Mit einem erfindungsgemäßen Zugangsknoten sind die gleichen Vorteile verbunden, wie diese vorstehend in Verbindung mit dem erfindungsgemäßen Verfahren erläutert wurden.

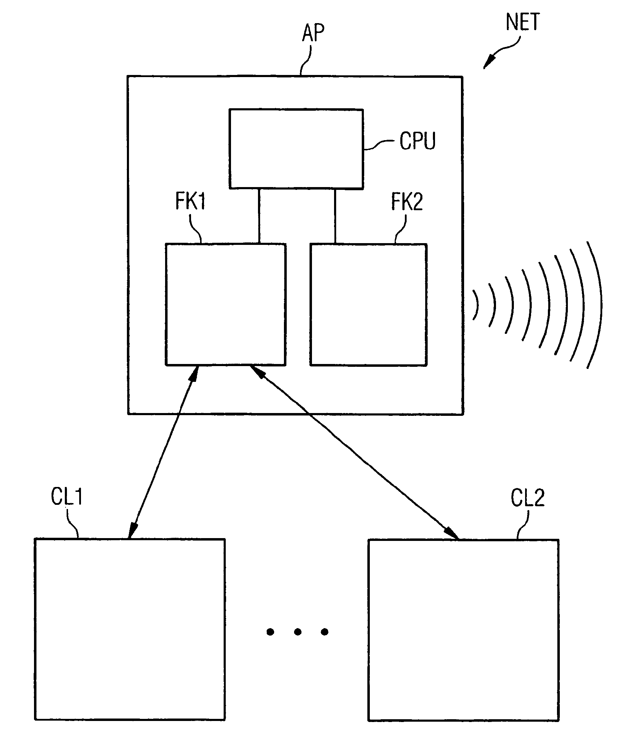

Die einzige Zeichnung zeigt eine schematische Darstellung eines drahtlosen Kommunikationsnetzwerks, das als WLAN ausgebildet ist und das erfindungsgemäße Verfahren zum Kanalwechsel ausführt.

Das drahtlose Kommunikationsnetzwerk umfasst beispielhaft einen Zugangsknoten AP sowie zwei Clients CL1, CL2. Unabhängig von der zeichnerischen Darstellung könnte ein drahtloses Kommunikationsnetzwerk auch mehrere Zugangsknoten AP und eine größere oder kleinere Anzahl an Clients aufweisen.

Der Zugangsknoten AP verfügt über eine Recheneinheit CPU, welche mit einer ersten und einer zweiten Sende-/Empfangs-Schnittstelle FK1, FK2 gekoppelt ist. Daneben kann der Zugangsknoten weitere, für die Erfindung nicht notwendige Komponenten umfassen. Die Sende-/Empfangs-Schnittstellen werden auch als Funkadapter oder Funkkarten bezeichnet.

Die Datenkommunikation zwischen dem Zugangsknoten AP und einem jeweiligen Client CL1, CL2 erfolgt innerhalb eines vorgegebenen Frequenzbereichs, z.B. im ISM-Frequenzband zwischen 5,15 GHz und 5,725 GHz. Innerhalb dieses Frequenzbereichs erfolgt die Datenkommunikation auf einem von mehreren Kanälen, z.B. Kanal 54. Die Kommunikation zwischen dem Zugangsknoten AP und den Clients CL1, CL2 auf diesem Kanal erfolgt über die erste Sende-/Empfangs-Schnittstelle FK1. Da das auf WLAN basierende Kommunikationsnetzwerk NET lediglich Sekundärnutzer des gerade operativ genutzten Kanals ist, muss eine Überwachung auf einen bevorrechtigten Primärnutzer, z.B. eine Radaranwendung, erfolgen. Diese Überwachung (d.h. die Detektion auf eine Radaranwendung) erfolgt mittels der ersten Sende-/Empfangs-Schnittstelle FK1.

Mit der zweiten Sende-/Empfangs-Schnittstelle FK2 werden parallel und, vorzugsweise kontinuierlich, zum operativen Betrieb die innerhalb des vorgegebenen Frequenzbereichs freien Kanäle gesucht. Unter einem freien Kanal werden solche Kanäle verstanden, welche in keinem Fall durch einen Primärnutzer und optional auch nicht durch einen anderen Sekundärnutzer verwendet werden.

Sowohl die erste als auch die zweite Sende-/Empfangs-Schnittstelle FK1, FK2 melden aufgefundene Radaranwendungen sowie freie Kanäle an die Recheneinheit CPU. Im Falle der Detektion einer Radaranwendung durch die erste Sende-/Empfangs-Schnittstelle FK1 steht durch das permanente Scannen auf freie Kanäle mittels der zweiten Sende-/Empfangs-Schnittstelle FK2 sofort ein freier Kanal zum Ausweichen für die Fortführung der Datenkommunikation zur Verfügung. Die Recheneinheit CPU kann dann einen Kanalwechsel ohne Unterbrechung der Kommunikation realisieren, indem z.B. die operative Kommunikation auf die zweite Sende-/Empfangs-Schnittstelle FK2 übergeht, während das Scannen auf freie Kanäle durch die erste Sende-/Empfangs-Schnittstelle FK1 übernommen wird.

Die Umschaltung der operativen Datenkommunikation auf die zunächst zum Scannen verwendete Sende-/Empfangs-Schnittstelle nach einer Erkennung eines Primärnutzers über die operative Sende-/Empfangs-Schnittstelle und die Nutzung eines als frei von Radar erkannten Kanals ermöglichen einen reibungsloseren Betrieb eines drahtlosen Kommunikationsnetzwerks, was insbesondere im industriellen Umfeld von Bedeutung ist. Die hierzu notwendige Übermittlung der MAC-Adresse der zweiten Sende-/Empfangs-Schnittstelle bei einem Kanalwechsel und Fortführung der Kommunikation über diese zweite Sende-/Empfangs-Schnittstelle erfolgt über ein sog. Info-Element in einem von dem Zugangsknoten an die Clients gesendeten Beacon, mit welchem die Clients über den Kanalwechsel informiert werden. Das entsprechende Beacon kann über die erste Sende-/Empfangs-Schnittstelle mehrfach übertragen werden, während gleichzeitig bereits die Datenkommunikation über die zweite Sende-/Empfangs-Schnittstelle erfolgt. Nach Beendigung der Aussendung der Beacons, welche den Kanalwechsel signalisieren, geht die erste Sende-/Empfangs-Schnittstelle in den beschriebenen Scan-Betrieb zur Suche freier Kanäle in dem vorgegebenen Frequenzbereich über.

Durch diese Vorgehensweise kann der Abbruch der Kommunikation nach 24 Stunden zur Prüfung auf Radaranwendungen vermieden werden. Ebenso kann die Prüfung auf Radaranwendungen auf einen minimalen Aufwand reduziert werden. Denn auch eine solche Prüfung bewirkt einen kurzen, im industriellen Einsatz jedoch nicht akzeptablen Ausfall der Datenkommunikation. Ein zusätzlicher Gewinn ist, dass im Falle einer Radarerkennung auf dem Nutzdatenkanal, d.h. dem von der ersten Sende-/Empfangs-Schnittstelle FK1 genutzten Kanal keine (60 Sekunden lange) Überprüfung notwendig ist, da über die zweite Sende-/Empfangs-Schnittstelle FK2 bereits ein freier Ausweichkanal aufgefunden ist.

Ein weiterer Vorteil ist, dass durch die Nutzung der zweiten Sende-/Empfangs-Schnittstelle der beschriebene Kommunikationsausfall von mehreren Beacon-Intervallen im Fall einer Radarerkennung durch die erste Sende-/Empfangs-Schnittstelle umgangen werden kann. Der Zugangsknoten ist grundsätzlich nach einer Radarerkennung sofort bereit, auf dem freien Ausweichkanal die operative Kommunikation wieder aufzunehmen.

Nachdem die zweite Sende-/Empfangs-Schnittstelle eine andere Hardware-Adresse, d.h. MAC-Adresse, als die erste Sende-/Empfangs-Schnittstelle aufweist, werden die Clients CL1, CL2 in den Beacons, in denen diese über einen Kanalwechsel durch ein hinzugefügtes Info-Element informiert werden, auch über die geänderte Hardeware-Adresse in Kenntnis gesetzt. Durch die Umschaltung der Kommunikation bei einem Kanalwechsel von der ersten Sende-/Empfangs-Schnittstelle FK1 auf die zweite Sende-/Empfangs-Schnittstelle FK2 kann die Umschaltzeit nach einer Erkennung eines Primärnutzers von bisher mehreren hundert Millisekunden auf wenige Millisekunden verkürzt werden. Damit diese Umschaltung reibungslos abläuft, ist lediglich sicherzustellen, dass die Clients des drahtlosen Kommunikationsnetzwerks NET die entsprechende Information (in einem sog. Info-Element) innerhalb des Beacons mit der MAC-Adresse der zweiten Sende-/Empfangs-Schnittstelle FK2 interpretieren können.

Durch die Nutzung einer zweiten Sende-/Empfangs-Schnittstelle in einem Zugangsknoten zum Scannen auf freie Kanäle können Kommunikationsabbrüche, die alle 24 Stunden auf der operativ genutzten Sende-/Empfangs-Schnittstelle erfolgen, vermieden werden. Das Scannen auf freie Kanäle ist gleichzusetzen mit dem Empfangen von Signalen von Primärnutzern (in der Regel Radarsignalen) im verwendeten Frequenzbereich. Aus dieser Information können die freien Kanäle bestimmt werden. Ebenso kann ein Kommunikationsabbruch nach Erkennen eines Primärnutzers vermieden werden, da der zu verwendende freie Kanal der Recheneinheit des Zugangsknotens bereits bekannt ist.

## Patentansprüche

1. Verfahren zum Kanalwechsel in einem drahtlosen Kommunikationsnetzwerk (NET), das zumindest einen Zugangsknoten (AP) und eine Anzahl an Clients (CL1, CL2) umfasst, wobei das Kommunikationsnetzwerk (NET) in einem vorgegebenen Frequenzbereich einen von mehreren möglichen Kanälen als Sekundärnutzer zur Datenkommunikation nutzt, bei dem
- eine Datenkommunikation zwischen dem Zugangsknoten (AP) und der Anzahl an Clients (CL1, CL2) über eine erste Sende-/Empfangs-Schnittstelle (FK1) des Zugangsknotens (AP) auf einem ersten Kanal der möglichen Kanäle erfolgt;
- parallel zu der Datenkommunikation über die erste Sende-/Empfangs-Schnittstelle (FK1) die möglichen Kanäle daraufhin überprüft werden, welche der Kanäle freie Kanäle sind, die durch keinen Primärnutzer verwendet werden;
- ein Kanalwechsel von dem ersten Kanal auf einen der freien Kanäle durchgeführt wird, wenn durch den Zugangsknoten (AP) des Kommunikationsnetzwerks (NET) eine bevorrechtigte Nutzung des ersten Kanals durch einen Primärnutzer festgestellt wird,
**dadurch gekennzeichnet, dass**
- die Überprüfung der möglichen Kanäle durch eine zweite Sende-/Empfangsschnittstelle (FK2) des Zugangsknotens erfolgt;
- die Datenkommunikation auf dem zu verwendenden freien Kanal über die zweite Sende-/Empfangs-Schnittstelle (FK2) erfolgt.

2. Verfahren nach Anspruch 1, bei dem die Überprüfung der möglichen Kanäle auf freie Kanäle über die zweite Sende-/Empfangs-Schnittstelle kontinuierlich durchgeführt wird.

3. Verfahren nach Anspruch 1 oder 2, bei dem für einen Kanalwechsel der Anzahl an Clients (CL1, CL2) in einem Beacon der zu verwendende freie Kanal mitgeteilt wird.

4. Verfahren nach Anspruch 3, bei dem der zu verwendende freie Kanal in dem ersten, den Kanalwechsel signalisierenden Beacon integriert wird.

5. Verfahren nach einem der vorhergehenden Ansprüche, bei dem der Anzahl an Clients (FK1, FK2) eine Hardware-Adresse der zweiten Sende-/Empfangs-Schnittstelle in dem Beacon mitgeteilt wird, in dem der zu verwendende freie Kanal signalisiert wird.

6. Verfahren nach einem der vorhergehenden Ansprüche, bei dem nach erfolgtem Kanalwechsel durch die erste Sende-/Empfangs-Schnittstelle (FK1) des Zugangsknotens (AP) parallel zu der Datenkommunikation über die zweite Sende-/Empfangs-Schnittstelle (FK1) alle der möglichen Kanäle daraufhin überprüft werden, welche der Kanäle freie Kanäle sind.

7. Verfahren nach einem der vorhergehenden Ansprüche, bei dem der vorgegebene Frequenzbereich im ISM-Frequenzband zwischen 5,15 GHz und 5,725 GHz liegt.

8. Verfahren nach einem der vorhergehenden Ansprüche, bei dem das Kommunikationsnetzwerk als Sekundärnutzer des vorgegebenen Frequenzbereichs ein auf WLAN oder Bluetooth basierendes Kommunikationsnetzwerk ist.

9. Verfahren nach einem der vorhergehenden Ansprüche, bei dem ein Primärnutzer des vorgegebenen Frequenzbereichs gegeben ist, wenn durch den Zugangsknoten (AP) ein Radarsignal detektiert wurde.

10. Zugangsknoten (AP) für ein drahtloses Kommunikationsnetzwerk, das insbesondere auf WLAN oder Bluetooth basiert, der dazu ausgebildet ist,
- eine Datenkommunikation zwischen dem Zugangsknoten (AP) und einer Anzahl an Clients (CL1, CL2) des Kommunikationsnetzwerks über eine erste Sende-/Empfangs-Schnittstelle (FK1) des Zugangsknotens (AP) auf einem ersten Kanal einer Anzahl an möglichen Kanälen vorzunehmen;
- parallel zu der Datenkommunikation über die erste Sende-/Empfangs-Schnittstelle (FK1) zu überprüfen, welche der Kanäle freie Kanäle sind, die durch keinen Primärnutzer verwendet werden;
- einen Kanalwechsel von dem ersten Kanal auf einen der freien Kanäle zu initiieren, wenn durch den Zugangsknoten (AP) des Kommunikationsnetzwerks (NET) eine bevorrechtigte Nutzung des ersten Kanals durch einen Primärnutzer festgestellt wird;
**dadurch gekennzeichnet, dass** dieser weiter dazu ausgebildet ist
- die möglichen Kanäle durch eine zweite Sende-/Empfangsschnittstelle (FK2) des Zugangsknotens zu überprüfen;
- die Datenkommunikation auf dem zu verwendenden freien Kanal über die zweite Sende-/Empfangs-Schnittstelle (FK2) durchzuführen.

11. Zugangsknoten nach Anspruch 10,
**dadurch gekennzeichnet, dass** der Zugangsknoten zur Durchführung eines Verfahrens zum Kanalwechsel gemäß einem der Ansprüche 1 bis 9 ausgebildet und eingerichtet ist.

## Claims

1. Method for switching channels in a wireless communication network (NET) comprising at least one access point (AP) and a number of clients (CL1, CL2), wherein the communication network (NET), in a predetermined frequency range, uses one of a number of possible channels as secondary users for data communication, in which
- data communication between the access point (AP) and the number of clients (CL1, CL2) takes place via a first transmit/receive interface (FK1) of the access point (AP) on a first channel of the possible channels;
- in parallel to the data communication via the first transmit/receive interface (FK1), a second transmit/receive interface (FK2) of the access point (AP) checks the possible channels as to which of the channels are free channels that are not being used by any primary user;
- A switch of channel from the first channel to one of the free channels is carried out if a prioritised use of the first channel by a primary user is established by the access point (AP) of the communication network (NET).
**characterised in that**
- the checking of the possible channels for free channels is carried out via a second transmit/receive interface (FK2) of the access point;
- data communication on the free channel to be used is carried out via the second transmit/receive interface (FK2).

2. Method in accordance with claim 1, in which the checking of the possible channels for free channels is carried out continuously via the second transmit/receive interface.

3. Method in accordance with claim 1 or 2, in which, for a switch of channel, the number of clients (CL1, CL2) is notified in a beacon about the free channel to be used.

4. Method in accordance with claim 3, in which the free channel to be used is integrated into the first channel switch signalling beacon.

5. Method in accordance with one of the preceding claims, in which the number of clients (FK1, FK2) is notified of a hardware address of the second transmit/receive interface in the beacon, in which the free channel to be used is signalled.

6. Method in accordance with one of the preceding claims, in which, after the channel has been switched by the first transmit/receive interface (FK1) of the access point (AP), in parallel to the data communication, a check is made on all of the possible channels via the second transmit/receive interface (FK2) as to which of the channels are free channels.

7. Method in accordance with one of the preceding claims, in which the predetermined frequency range lies in the ISM frequency range between 5.15 GHz and 5.725 GHz.

8. Method in accordance with one of the preceding claims, in which the communication network as secondary user of the predetermined frequency range is a WLAN or Bluetooth-based communication network.

9. Method in accordance with one of the preceding claims, in which a primary user of the predetermined frequency range emerges if a radar signal was detected by the access point (AP) .

10. Access point (AP) for a wireless communication network, especially a WLAN or Bluetooth-based communication network, which is embodied,
- to undertake data communication between the access point (AP) and a number of clients (CL1, CL2) of the communication network over a first transmit/receive interface (FK1) of the access point (AP) on a first channel of a number of possible channels;
- in parallel to the data communication over the first transmit/receive interface (FK1), to check by a second transmit/receive interface (FK2) the number of possible channels as to which of the channels are free channels which are not being used by any primary user;
- to initiate a switch of channel from the first channel to one of the free channels if the access point (AP) of the communication network (NET) establishes a prioritised use of the first channel by a primary user,
**characterised in that** said access point is further embodied for
- carrying out the checking of the possible channels via a second transmit/receive interface (FK2) of the access point;
- carrying out data communication on the free channel to be used via the second transmit/receive interface (FK2).

11. Access point in accordance with claim 10,
**characterised in that** the access point is embodied and configured for carrying out a method for switching channels in accordance with one of claims 1 to 9.

## Revendications

1. Procédé de changement de canal dans un réseau ( NET ) de communication sans fil, qui comprend au moins un noeud ( AP ) d'accès et un certain nombre de clients ( CL1, CL2 ), le réseau ( NET ) de communication utilisant dans une plage de fréquences prescrite, l'un de plusieurs canaux possibles comme utilisateur secondaire pour la communication de données, dans lequel
- une communication de données entre le noeud ( AP ) d'accès et le certain nombre de clients ( CL1, CL2 ) s'effectue par une première interface ( FK1 ) d'émission/réception du noeud ( AP ) d'accès sur un premier canal parmi les canaux possibles ;
- en parallèle à la communication de données on contrôle par la première interface ( FK1 ) d'émission/réception parmi les canaux possibles ceux qui sont des canaux libres, qui ne sont pas utilisés par un utilisateur primaire ;
- on effectue un changement de canal en passant du premier canal à l'un des canaux libres, lorsque l'on constate par le noeud ( AP ) d'accès du réseau ( NET ) de communication une utilisation privilégiée du premier canal par un utilisateur primaire,
**caractérisé en ce que**
- on effectue le contrôle des canaux possibles par une deuxième interface ( FK2 ) d'émission/réception du noeud d'accès ;
- on effectue la communication de données sur le canal libre à utiliser par l'intermédiaire de la deuxième interface ( FK2 ) d'émission/réception.

2. Procédé suivant la revendication 1, dans lequel on effectue en continue le contrôle des canaux possibles comme étant des canaux libres par la deuxième interface d'émission/réception.

3. Procédé suivant la revendication 1 ou 2, dans lequel on fait par d'un changement de canal au certain nombre de clients ( CL1, CL2 ) dans une balise du canal libre à utiliser.

4. Procédé suivant la revendication 3, dans lequel on intègre le canal libre à utiliser dans la première balise signalant le changement de canal.

5. Procédé suivant l'une des revendications précédentes, dans lequel on fait part au certain nombre de clients ( FK1, FK2 ) d'une adresse matérielle de la deuxième interface d'émission/réception dans la balise dans laquelle le canal libre à utiliser est signalé.

6. Procédé suivant l'une des revendications précédentes, dans lequel après avoir effectué le changement de canal par la première interface ( FK1 ) d'émission/réception du noeud ( AP ) d'accès, on contrôle en parallèle à la communication de données par la deuxième interface ( FK1 ) d'émission/réception tous les canaux possibles pour savoir ceux des canaux qui sont des canaux libres.

7. Procédé suivant l'une des revendications précédentes, dans lequel la plage de fréquence prescrite est dans la bande de fréquence ISM comprise entre 5,15 GHz et 5,725 GHz.

8. Procédé suivant l'une des revendications précédentes, dans lequel le réseau de communication comme utilisateur secondaire de la plage de fréquence prescrite est un réseau de communication reposant sur WLAN ou Bluetooth.

9. Procédé suivant l'une des revendications précédentes, dans lequel il y a un utilisateur primaire de la base de fréquence prescrite lorsqu'un signal radar a été détecté par le noeud ( AP ) d'accès.

10. Noeud ( AP ) d'accès pour un réseau de communication sans fil qui repose notamment sur WLAN ou Bluetooth, qui est constitué
- pour effectuer sur un premier canal d'un certain nombre de canaux possibles, une communication de données entre le noeud ( AP ) d'accès et un certain nombre de clients ( CL1, CL2 ) du réseau de communication par l'intermédiaire d'une première interface ( FK1 ) d'émission/réception d'un accès ;
- pour contrôler en parallèle à une communication de données par l'intermédiaire de la première interface ( FK1 ) d'émission/réception, ceux des canaux qui sont libres, qui ne sont pas utilisés par un utilisateur primaire,
- pour faire débuter un changement de canal en passant du premier canal à l'un des canaux libres lorsqu'il est constaté par le noeud ( AP ) d'accès du réseau ( NET ) de communication une utilisation privilégiée du premier canal par un utilisateur primaire ;
**caractérisé en ce que**
- celui-ci est constitué en outre,
- pour contrôler des canaux possibles par une deuxième interface ( FK2 ) d'émission/réception d'un accès,
- pour effectuer la communication de données sur le canal libre à utiliser par l'intermédiaire de la deuxième interface ( FK2 ) d'émission/réception.

11. Noeud d'accès suivant la revendication 10,
**caractérisé en ce que** le noeud d'accès est constitué et est conçu pour effectuer un procédé de changement de canal suivant l'une des revendications 1 à 9.
